Europäisches Patentamt

European Patent Office

Office européen des brevets

(11) Publication number: **0 519 574 A1**

## EUROPEAN PATENT APPLICATION

(21) Application number: **92201831.2**

(22) Date of filing: **19.06.92**

(51) Int. Cl.5: **H02J 3/46**

(30) Priority: **20.06.91 NL 9101065**

(43) Date of publication of application:
**23.12.92 Bulletin 92/52**

(84) Designated Contracting States:
**AT BE CH DE DK ES FR GB GR IT LI LU MC NL PT SE**

(71) Applicant: **HOLEC SYSTEMEN & COMPONENTEN B.V.**
**Tuindorpstraat 61**
**NL-7555 CS Hengelo(NL)**

(72) Inventor: **Bouwknegt, Koos**
**Rumkehof 28**
**NL-7555 NM Hengelo(NL)**

(74) Representative: **de Bruijn, Leendert C. et al**
**Nederlandsch Octrooibureau**
**Scheveningseweg 82 P.O. Box 29720**
**NL-2502 LS Den Haag(NL)**

(54) **Device for the load-sharing parallel connection of alternating-voltage sources.**

(57) A device for load-sharing parallel connection of alternating-voltage sources to a parallel rail. Each alternating-voltage source is provided with an amplitude-control and frequency-control device and a control circuit for generating control variables and supplying them to the amplitude-control and frequency-control device. The control circuit is provided with means of determining the active and reactive differential power which is delivered by the respective alternating-voltage source above or below a part, associated thereto, of the total active or reactive power, respectively, to be delivered to the parallel rail. Said means derive a frequency-dependent frequency-control variable from the active differential power by means of an integrator and a frequency-dependent amplitude-control variable from the reactive differential power. The frequency-control variable is supplied to the frequency-control section and the amplitude-control variable to the amplitude-control section of the amplitude-control and frequency-control device.

As a result of this control procedure, both the active and reactive powers are proportionally distributed over the alternating-voltage sources, even if these have different control strategies (some synchronise and others do not), without the sources knowing one another's control strategy.

fig-1

The invention relates to a device for the load-sharing parallel connection of alternating-voltage sources to a parallel rail, in which each alternating-voltage source is provided with an amplitude-control and frequency-control device and a control circuit for generating control variables and supplying them to the amplitude-control and frequency-control device, in which the control circuit is provided with means of determining the active and reactive differential power which is delivered by the respective alternating-voltage source above or below a portion, associated thereto, of the total active or reactive power, respectively, to be delivered to the parallel rail, and of deriving from the active differential power a frequency-dependent frequency-control variable to be used for the frequency control and of deriving from the reactive differential power an amplitude-control variable to be used for the amplitude control. Such a device is disclosed by Fr-A-2 632 130.

Parallel operation of alternating-voltage sources is used to an increasing extent to subsequently expand the installed power of a system or to increase the reliability of a system. The alternating-voltage sources may consist of UPS systems, windmills, invertors, diesel generator sets etc. The sources may be single-phase or poly-phase.

It is often preferable to arrange for the plurality of alternating-voltage sources to operate in parallel on a parallel rail. In the event of a failure of one of the alternating-voltage sources, the other sources experience only a small step in load. Normally, the sources do not operate at full load and the total load is preferably no higher than can be delivered by N-1 sources. It is only in this case that the reliability of the system is higher than that of the assembled sources.

In the case of load-sharing parallel operation with N alternating-voltage sources, the output frequency, phase and amplitude of each source has to be controlled in such a way that each of them delivers 1/N of the total output current, or more generally, a portion which is proportional to its type power.

For obtaining a balance of the current between the invertors a differential signal is produced in the device known from Fr-A-2 632 130, which signal is equal to the difference between a detected signal corresponding to the current delivered by a first voltage source and a detected signal corresponding to a current delivered by a second voltage source. Thus said differential signal corresponds to the transversal current. In each voltage source two voltages are derived having a phase difference of 90°, said voltages and the differential signal being processed in circuits for developping a reactive power component and an active power component. Said components are supplied to a control device, in which the reactive power component is used for the amplitude control and the active power component is used for the frequency and phase control of the voltage source.

According to the Fr-A-2 632 130 invertors with different capacities could be used. In this case means could be provided for having a current distribution of the parallel-connected voltage source corresponding to the capacities of the sources.

On the basis of the total current to be delivered to the parallel rail, the current delivered by an alternating-voltage source and the voltage delivered thereby, in the device known from DE-A-3 310 976 and EU-A-0014415 an equivalent control variable is generated in each alternating-voltage source for a correction if the source impedance is not purely inductive. Said equivalent control variable is equal to the voltage of the respective alternating-voltage source plus the internal impedance of the alternating-voltage source times a differential current which is equal to the difference between a portion of the total current to be delivered to the parallel rail, which portion is associated to the respective alternating-voltage source, and the actual current delivered by the alternating-voltage source. In the case of N identical alternating-voltage sources, the associated portion may be equal to 1/N × the total output current or a portion of said output current proportional to the design power of the alternating-voltage source.

The equivalent control variable is fed both to the frequency-control branch and the amplitude-control branch of the amplitude-control and frequency-control device of the alternating-voltage source.

Furthermore, the NL-A-7606944 discloses a device for controlling the active and reactive load of generators operating with a common mains. One generator is used as controling generator (reference generator), preferably the generator having the maximal real active and reactive load.

In the known systems the parallel-connected alternating-voltage sources operate as a master/slave system. The disadvantage of this is that interconnections are necessary to determine, and to communicate to the other alternating-voltage sources, who the master is.

In a correctly operating mains, all the alternating-voltage sources on the mains are synchronised. However, if said mains fails or if the mains frequency is not acceptable, one (the one with the highest priority) has to control to a fixed frequency while the remaining alternating-voltage sources synchronise with the parallel rail. A disadvantage which is experienced is that, in the known systems, either a mains failure detection system is required in the master (central detection) with distribution of this decision, or a decentralised mains failure detection system is necessary, with the risk that the one still just accepts the mains as a frequency source and another just fails any longer to accept it.

Undoubtedly, if reliability is the objective, as few connections as possible, as few common components in the system as possible and preferably identical sources are desirable.

If the public mains is used as a backup for the system, the system should remain synchronised to said mains as long as possible, so that the load can be switched back to said mains in part or entirely without interruption.

The object of the invention is to provide a device of the type mentioned at the outset, in which the abovementioned drawbacks are avoided and the aim mentioned is fulfilled.

Said object is achieved, according to the invention, in that an integrator for producing the frequency dependence of the frequency-control variable is provided.

In this case, the alternating-voltage sources may or may not each be synchronised to the mains without knowing this about one another, while the total load is nevertheless reasonably distributed over the alternating-voltage sources, preferably in accordance with the nominal power of each one. There is therefore no master/slave relationship and no interconnections are any longer necessary.

Using the active and reactive differential powers as a basis for the control achieves the result that a common output amplitude is produced which is equal to the average of the fixed desired amplitude values and that any permissible mains voltage is synchronously tracked if the latter is deemed acceptable by at least one source. If the mains frequency is not found to be within predetermined limits by any single source, the common output frequency of the parallel circuit of the alternating-voltage sources becomes equal to the average of the desired frequency values, each source being able to determine independently whether to follow the mains frequency or not, and the individual choice thereof not having to be known to the other sources.

The essence of the invention is that the differential active power signal is integrated before it influences the frequency of the voltage source. This is only possible if the differential active power signal is a DC signal (average value signal) and not if said power signal is included in a number of 50 Hz sinusoidal signals as in the systems described in the Fr-A-2 632 130, DE-A-3 310 976 and EU-A-0014 415. Such an integration makes the control slightly slower, but this is not serious because the only quick changes are load steps which influence the individual and total currents in equal extent and consequently do not cause an error in the balance control of the differential active and reactive power.

An integrator for the differential active power signal is particular advantageous if one of the potential voltage sources is the public mains:

1. If the public mains does not participate as source, but at least one source synchronises with the public mains all of the sources are synchronous with the mains. This is an advantage because in that case the public mains may be connected in parallel to the system at any moment without having the system to synchronise first.

2. This is an inherent property of the system. A separate communication between sources is not required for indicating if said sources synchronise with the public mains or not.

3. The reliability of a system of parallel sources, in particular uninterrupted power supplies for computers, increases with less common components or connections. In the system according to the invention only one common current transformer and only two connections are necessary, one connection for the total current divided by the number of sources and if the public mains is also a source, a second connection for indicating that the mains is indeed one of the sources.

4. It is not required that one of the sources differs from the other sources in circuit implementation or in control method. There is no master in the system of the invention as in the systems according to the EP-A-0 014 415 and DE-A- 3 310 976 (which indicates the frequency), or in the system according to NL-A- 76 06944 (the source having the highest current).

Furthermore, it is emphasized that the system and method according to the invention has no master source and mininum number of connections between the sources, while many operations (synchronised with a mains or not, parallel to a hard mains or not) are still possible.

Only one auxiliary interconnection is necessary, namely the one for determining the total current.

The control variables can be supplied as sole control variables to the amplitude-control and frequency-control device, or they may be subtracted from the desired amplitude or desired frequency values which are used in the amplitude-control and frequency-control device.

In an embodiment of the invention, the integrator to which the active differential power is supplied has a finite low-frequency gain, also referred to as leakage. This achieves the result that, in the event of small errors in the determination of the measured value of the active differential power, total runaway of the frequency is avoided if the alternating-voltage sources are no longer synchronised with the mains.

In another embodiment, with synchronisation with the mains, a rate-of-variation limiter, preferably with presetting, is used in the frequency-control circuit, and this achieves the result that, after mains failure, it is ensured that the frequency of the alternating-voltage source approaches the nominal frequency of, for example, 50 Hz at a constant rate.

Further embodiments are described in the accompanying subclaims.

The invention will be explained in greater detail below by reference to the drawings. In the drawings:

Figure 1 shows a basic circuit diagram of a device according to the invention;

Figure 2 shows a diagram of an embodiment of the device according to the invention, which embodiment is to be used by preference.

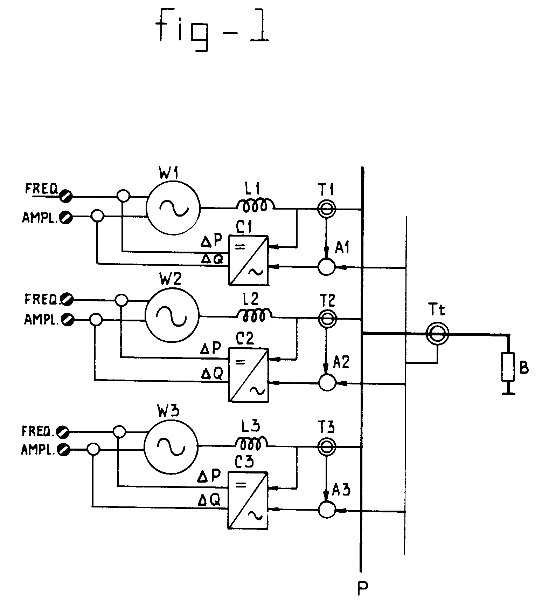

Figure 1 shows, as an example, a basic circuit diagram of a parallel connection of alternating-voltage sources W1, W2 and W3, with the choke coils L1, L2 and L3 associated therewith and connected in series therewith, to a parallel rail. Alternating-voltage sources are understood as meaning, inter alia, UPS systems, windmills, invertors and diesel generator sets. The series choke coils represent, partly or as a whole, the essentially inductive source impedance of the alternating-voltage sources.

In the parallel circuit shown, the principle of individual control of the alternating-voltage sources is used, the total power to be delivered being distributed over the plurality of alternating-voltage sources. The simplest case arises if the alternating-voltage sources have an identical nominal power so that each alternating-voltage source delivers a power which is equal to the total power to be delivered divided by the number of sources. Of course, the nominal powers do not have to be identical to one another, it being possible in such cases for the load sharing to take place in proportion to the nominal powers.

The total current supplied to the load B is measured by means of a current transformer Tt, a signal being delivered to the subtracting devices A1, A2 and A3 which, if N alternating-voltage sources having identical nominal power are used, is equal to the total current delivered, divided by N. Supplied to the other input of the subtracting devices A1, A2 and A3 is the current which is delivered by the respective alternating-voltage source and which is measured by means of the respective current transformers T1, T2 or T3. The current measurements may be performed on 1 or 3 phases. If the alternating-voltage sources do not have the same nominal power, the signals derived from the total current delivered are processed in such a way that they are related to one another as the type powers of the alternating-voltage sources.

The subtraction operation in the devices A1, A2 and A3 produces the signal ΔI, which is 0 for an ideal current distribution.

According to the invention, the individual control of the alternating-voltage sources is designed in such a way that the sources may or may not synchronise with the mains without knowing this about one another, while the total load is nevertheless reasonably distributed over the sources in accordance with the nominal power of each source. There is therefore no master/slave relationship and no interconnections are any longer necessary.

The load sharing is based on the determination, for each alternating-voltage source, of the active and the reactive power ΔP and ΔQ, respectively, which is delivered by said source above or below the total active or reactive power, respectively, to be delivered. This determination is performed in the circuits C1, C2 and C3 by multiplying, for example, the instantaneous values of ΔI by the common, and locally measurable, output voltage, or output voltage rotated through 90°, and then filtering.

The essence of the invention is that the differential active power signal is integrated before it influences the frequency of the voltage source. This is only possible if the differential active power signal is a DC signal (average value signal) and not if said power signal is included in a number of 50 Hz sinusoidal signals as in the systems described in the Fr-A-2 632 130, DE-A-3 310 976 and EU-A-0014 415. Such an integration makes the control slightly slower, but this is not serious because the only quick changes are load steps which influence the individual and total currents in equal extent and consequently do not cause an error in the balance control of the differential active and reactive power.

An integrator for the differential active power signal is particularly advantageous if one of the potential voltage sources is the public mains:

1. If the public mains does not participate as source, but at least one source synchronises with the public mains all of the sources are synchrnous with the mains. This is an advantage because in that case the public mains may be connected in parallel to the system at any moment without having the system to synchronise first.

2. This is an inherent property of the system. A separate communication between sources is not required for indicating if said sources synchronise with the public mains or not.

3. The reliability of a system of parallel sources, in particular uninterrupted power supplies for computers, increases with less common components or connections. In the system according to the invention only one common current transformer and only two connections are necessary, one connection for the total current divided by the number of sources and if the public mains is also a source, a second connection for indicating that the mains is indeed one of the sources.

4. It is not required that one of sources differs from the other sources in circuit implementation or in control method. There is no master in the system of the invention as in the systems according to the EP-A-0 014 415 and DE-A- 3 310 976 (which indicates the frequency) or in the system according to NL-A-76 06944 (the source having the highest current).

Furthermore, it is emphasized that the system and method according to the invention has no master source and mininum number of connections between the sources, while many operations (synchronised with a mains or not, parallel to a hard mains or not) are still possible.

In the ideal situation, $\Delta P$ and $\Delta Q$ are equal to 0. In said circuits C1, C2 and C3, a frequency-dependent operation is also performed on the signals $\Delta P$ and $\Delta Q$ before they are used to control the frequency and amplitude, respectively, of the respective alternating-voltage source. The control variables $\Delta P$ and $\Delta Q$ can be used as sole control signals, or in an alternative embodiment, they can be subtracted from the respective desired values of the amplitude and frequency control. The controls described above produce a common output amplitude which is equal to the average of the fixed desired amplitude values, any mains voltage present being synchronously tracked if it is deemed to be acceptable by at least one source. If the mains voltage is not acceptable, the common output frequency becomes equal to the average of the desired frequency values. The sources do not have to know the "synchronised or unsynchronised" state of one another, the total load being distributed in both cases as proportionally as possible to the nominal powers of the sources. No auxiliary interconnections are necessary other than those for a total current measurement.

The determination of the frequency-dependent control variables $\Delta P$ and $\Delta Q$ is derived by means of the circuits C1, C2 and C3 from the output voltage V, supplied thereto, of the alternating-voltage source and the control signal $\Delta I$. Of course, the frequency-dependent control variables $\Delta P$ and $\Delta Q$ can be generated in a different manner.

The frequency dependency of the frequency-control variable is preferably of the first order in the control range. Said frequency dependency can be obtained very simply by using an integrator.

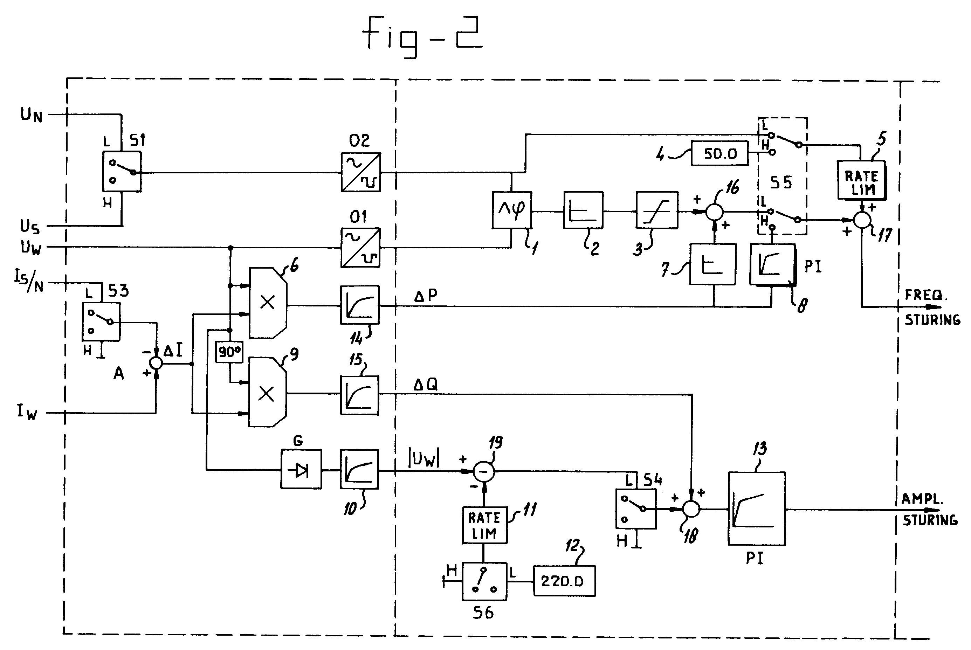

Figure 2 shows a circuit diagram of an embodiment, to be used by preference, of the invention for one of the parallel-connected alternating-voltage sources.

The following signals are measured on 1 or 3 phases and supplied to the device:

Un: the mains voltage

Us: the voltage on the parallel rail (total voltage)

Is/N: the total load current divided by the number of coacting sources (the factor 1/N may be chosen as proportional to the nominal powers of the parallel-connected alternating-voltage sources)

Iw: the output current of the alternating-voltage source

Uw: the output voltage of the alternating-voltage source. As soon as a source is coupled to the rail (when it is participating), Uw = Us.

The switches S1 .... S6 in Figure 2 are marked with an L and an H position. In the normal operating position, all the switches are in the position L. The chosen position of none of the switches needs to be known in the other sources.

The functions are:

S1

L = synchronise with the mains

H = synchronise with the parallel rail (short-duration condition before the source is connected in parallel to the rail)

L = load-sharing operation (source attempts to deliver a proportional portion of the total current as current)

H = no-load operation (source attempts to make the current zero in an otherwise completely connected and operating system, for example if the public mains is one of the sources).

S4

L = Amplitude is controlled in such a way that |Uw| is made equal to a reference, with a small correction based on $\Delta Q$.

H = Amplitude is controlled in such a way that $\Delta Q$ is made equal to zero, for example if the public mains is one of the sources.

S5

L = The source frequency synchronously tracks another frequency.

H = The source frequency is fixed and does not track any other frequency. This occurs, for example, during a mains failure.

S6

L = The amplitude of the source is controlled in accordance with a desired value.

H = The amplitude of the source voltage is controlled to zero.

This is an out-of-service or start-up situation.

The switch positions S1, S5 and S6 are determined for each source individually. The switch positions S3 and S4 are usually identical and H is set if a very hard source, which cannot be controlled by this system, forms part of the system, such as the public mains. This presence must be known to all the sources and consequently requires an additional interconnection.

For the sake of simplicity, identical nominal powers have been assumed. The signal derived from the total load current or summation current Is/N is supplied to the switch S3 which, in the position L supplies said signal to an input of the subtracting device A. The signal Iw is supplied to the other input of said subtracting device A. At the output of the subtracting device A there appears a signal ΔI which is proportional to the current which is delivered by the respective alternating-voltage source above or below a portion, associated thereto, of the total current delivered at that instant to a parallel rail, to which rail the alternating-voltage sources are connected in parallel. Said signal ΔI is supplied to a first input of the multipliers 6 and 9. The signal Uw is supplied to the second input of the multiplier 6, while said signal is supplied to the corresponding input of the multiplier 9 after a phase shift of 90°. Here the signal ΔI is multiplied by the output voltage of the alternating-voltage source, producing a signal ΔP which is proportional to the active differential power which is delivered by the respective alternating-voltage source above or below a portion, associated thereto, of the total active power delivered to the parallel rail. Multiplying said signal ΔI by the output voltage shifted through 90° produces the signal ΔQ which is proportional to the reactive differential power delivered by the respective alternating-voltage source which is more or less than a portion, associated thereto, of the total reactive power to be delivered to the parallel rail. The multiplier may either be an integrated circuit or a ΔI amplifier with a gain of +1 if the respective phase zero voltage is positive or -1 if it is negative. The determination of the signal ΔI and the determination, based thereon, of the signals ΔP and ΔQ is performed in each alternating-voltage source, the required voltage of the alternating-voltage source being available in each source. It is clear that no additional interconnections are necessary for the determinations mentioned. Preferably, the signals ΔP and ΔQ are passed through low-pass filters 14 and 15 in order to filter out the ripple produced during the multiplication.

In addition, the signal Uw is fed to a converter 01 which converts the sinusoidal shape into a square-wave or another wave form, a fixed point in the sinusoidal wave thereby being labelled for the purpose of synchronisation.

Depending on the position of the switch S1, either the mains voltage Un or the summation voltage Us is supplied to such a converter 02. The output signals of the converters 01 and 02 are supplied to the inputs of a phase comparator 1 whose output is connected to the input of a phase controller 2. The output of the phase controller 2, which may, for example, have a constant gain, is connected to the input of a limiter 3. The output signal of the limiter 3 is supplied to the adding device 16. The signal ΔP is fed via the phase controller 7 for the purpose of a small correction for load distribution to the other input of the adding device 16. In the position shown of the switch S5, the output of the adding device 16 is connected through to an input of the adding device 17. In the other position H of the switch S5, the signal ΔP is, however, supplied via the integrator 8 to said input of the adding device 17. In the position L of the switch S5, the output signal of the converter 02 is supplied via a rate-of-variation limiter 5 to the other input of the adding device 17. In the position H, the input of block 5 is connected to a reference generator 4 which is permanently set, for example, to 50 (Hz). The output signal of the adding device 17 is used to control the frequency of the alternating-voltage source.

The amplitude-control signal is generated as follows. The voltage Uw from the alternating-voltage source is supplied to the rectifying circuit G to whose output a low-pass filter 10 is connected as a smoothing circuit. The output signal |Uw| of the circuit 10, which is proportional to the amplitude of the voltage of the alternating-voltage source, is supplied to the plus input of the subtraction circuit 19, while the desired value of the reference generator 12 is supplied to the minus input thereof depending on the switch S6 and after passing through the rate-of-variation limiter 11. The output signal of the subtracting device 19 is supplied via the switch S4 to one input of the adding device 18, while the signal ΔQ is fed to the other input. The output signal of the adding device 18 is supplied to the integrator 13 whose output signal is used for the amplitude control.

Each source has an amplitude controller and a frequency controller. The amplitude is usually controlled to a fixed value, while the frequency is either controlled to a fixed value or in a manner such that the source voltage and, for example, the public mains are synchronous.

It is characteristic of the invention to subtract a frequency-dependent measure of ΔP from the desired frequency-controller value and a possibly frequency-dependent measure of ΔQ from the desired amplitude-controller value, or to use these signals as sole control variables for said controllers.

The amplitude correction is in principle frequency-independent, specifically approximately 10% decrease if ΔQ is approximately the nominal reactive power of the alternating-voltage source.

The frequency correction may be frequency independent, but it is known that in that case it has to be small, for example 1 Hz if ΔP is approximately the nominal active power P of the source. If the frequency correction is larger, fluctuations arise in the respective ΔPs.

In the device according to the invention, the alternating-voltage sources have an individual choice of synchronising with the mains. If an alternating-voltage source synchronises with a mains which is at a frequency of 49 Hz, while the other source does not synchronise therewith and therefore attempts to generate an alternating voltage having a frequency of 50 Hz, the exchanged power of said source will be Pn. In this case, one alternating-voltage source does not deliver anything, while the other delivers the full power. If the first alternating-voltage source is synchronised with an even lower mains frequency, the other alternating-voltage source will even feed back to the first mentioned alternating-voltage source. As a result of now integrating the differential power ΔP before using this variable as a frequency correction, both sources will now nevertheless start to deliver the same active power again. After all, each ΔP, however small, will always continue to increase or decrease the frequency of the alternating-voltage source which is not synchronised until ΔP becomes zero.

It has been found that small errors in the determination of the measured value of ΔP may cause a complete runaway of the frequency if both alternating-voltage sources (without knowing it about one another) are no longer synchronised with the mains. If, for example, both alternating-voltage sources measure the signals ΔP associated therewith 1 kW too high, both sources will always decrease their frequency. To suppress this, the low-frequency gain of the ΔP integrator is limited, for example, to 20 Hz correction if ΔP is the nominal power. Although this results in a small differential power or exchanged power, the runaway in frequency is at the same time limited in this case to 1 Hz if a measuring error is made in ΔP of 5% of the nominal power.

Moreover, it is necessary to ensure that the frequency of the alternating-voltage source is inherently unable to vary more rapidly than the ΔP integrator can still track with a maximum permissible ΔP.

In the case of synchronisation with the mains, a rate-of-variation limiter, preferably having a presetting, is incorporated in the frequency-control circuit. This limiter 5 is added in order to ensure after mains failure that in the alternating-voltage source, its frequency approaches 50 Hz at a constant rate.

This rate-of-variation limiter 5 is the main frequency memory in the alternating-voltage source and can be omitted if the alternating-voltage source is per se sluggish as regards frequency variations, as in the case of rotating sources. The presetting operates as follows:
On switching S5 from L to H (mains failure), the integrator 8 is set to zero;
On switching S5 from H to L (mains return), the value of the integrator 8 is added to the instantaneous value of the rate-of-variation limiter. In both cases, the effect is that the frequency-control value does not change on switching S5 and only changes gradually thereafter.

A description of the switches S1-S6, whose functions have already been stated earlier, follows below.

For normal operation, the switches are in the position L shown. The control signals are referred to as S1-S6 below.

The switch S1 is used to select synchronisation of the alternating-voltage source with the mains or with the parallel rail. This choice is only relevant if the switch S5 is in the position L since otherwise there is no synchronisation at all. It is only during the preparation for the parallel connection of the alternating-voltage source to the parallel rail that the switch S1 is in the position H, otherwise it is always in the position L. The choice is made during the switching procedure inside the alternating-voltage source.

In this connection, the phase comparator 1 delivers a voltage which is proportional to the phase difference between the input signals Un or Us and Uw, which phase difference is presented to a phase controller 2 whose output is connected to the input of the limiter 3. The choice of the position of the switch S5 is made inside each alternating-voltage source on the basis of acceptance thresholds for the mains voltage and mains frequency. For acceptance, the switch S5 is in the position L and the frequency of the alternating-voltage source is equal to the mains frequency after passing through the rate-of-variation limiter 5 plus a correction for synchronisation originating from the limiter 3 plus a smaller correction for load distribution from the controller 7.

If the mains is not acceptable, the switch S5 is in the position H and the frequency of the alternating-voltage source is equal to the fixed value provided by the desired frequency value generator 4 plus the integral of the active differential power ΔP produced by the integrator 8.

If the switch S3 is in the position L, a signal ΔI is determined which is the difference between the output current Iw of the alternating-voltage source and a proportional portion, for example Is/N, of the total current of all the parallel-connected sources.

The signals ΔP and ΔQ are then derived from said signal ΔI and the alternating-voltage Uw of the alternating-voltage source or the parallel rail voltage Us. However, if the switch S3 is in the position H, the total current of all the sources is not involved in the determination of the signals ΔP and ΔQ and the signals ΔP and ΔQ are equal to the active and reactive power, respectively, of said alternating-voltage source.

Signal ΔP corrects the frequency and the signal ΔQ the amplitude of the alternating-voltage source. Both corrections have an integrating nature. The active differential power or exchanged power ΔP is proportional to the phase difference between the internal voltage of the alternating-voltage source and the rail voltage. The frequency of the alternating-voltage source is controlled on the basis of the signal ΔP, so that, in order to close the control loop, the transfer of source frequency to source phase must occur, and this is an integrator. The amplitude controller contains the integrator 13. As a result of the integrating actions mentioned, ΔP and ΔQ will be controlled to zero in the steady state.

If the switch S3 is in the position L, the exchanged current ΔI is controlled to zero, while in the position H thereof, the absolute output current is controlled to zero, for example if the mains forms one of the alternating-voltage sources of the system. In general, the switch S3 can be used to choose between parallel operation with or without load.

In the normal operating state of the device, the switch S4 is in the position L, in which the amplitude controller regulates the difference between the measured value rectified by means of the devices G and 10 and the desired value from the desired amplitude value circuit 12 to zero by means of the integrator 13. The desired value is corrected on the basis of the exchanged reactive power ΔQ, as a result of which the voltage of the alternating-voltage source delivering the most (inductive) reactive power is reduced. During operation in parallel with a stable mains, measurement of Uw is pointless because it is the abovementioned stable mains voltage. In this case, the switch S4 is then set to the position H and the amplitude controller is controlled exclusively by the signal ΔQ. In the case of closed control, the input of an integrator becomes zero, so that ΔQ becomes zero and the source therefore tracks the parallel rail voltage without delivering current thereto. In the normal case, the switches S3 and S4 operate together and are set to position H via an interconnection over all the sources if the mains forms one of the alternating-voltage sources of the parallel-operating system.

The switch S6 sets the desired voltage value to zero as long as the alternating-voltage source is switched off. On start-up, the switch S6 is set to the position L, as a result of which the desired value increases by means of the rate-of-variation limiter 11.

In the left-hand portion of the device according to the invention, analog voltages are measured and undergo a preliminary processing. The blocks in the right-hand portion can be implemented in software in a microprocessor system.

The use of the invention is particularly beneficial in systems of sources in which the public mains is a backup. For this purpose, an attempt is made to keep the system at least synchronised with (but not connected to) the public mains, so that partial loads or the total load can be switched thereto without interruption or so that the public mains (sometimes) functions as one of the sources.

This is the case, in particular, for UPS systems. These act as a temporary replacement and as a quality improvement for the public mains. As long as the mains frequency is between, for example, 49 and 51 Hz, a UPS will track it. If the mains frequency deviates still further (or if the mains is absent), the UPS makes the nominal frequency 50 Hz and is no longer mains-synchronous. Each UPS therefore selects which frequency-control strategy to follow.

In a load-sharing parallel-operating system of alternating-voltage sources which all see, on the one hand, the same public mains and, on the other hand, the same output rail, all the sources should also control in accordance with the same strategy.

According to the invention, that is unnecessary. Even for dissimilar alternating-voltage sources, only one auxiliary connection between the sources is necessary both to communicate the total load current and to communicate the scaling thereof to the sources. If the public mains can be one of the sources, a second auxiliary connection is necessary to inform the sources that the mains forms part of the system.

**Claims**

1. Device for the load-sharing parallel connection of alternating-voltage sources to a parallel rail, in which each alternating-voltage source is provided with an amplitude-control and frequency-control device and a control circuit for generating control variables and supplying them to the amplitude-control and frequency-control device, in which the control circuit is provided with means of determining the active and reactive differential power which is delivered by the respective alternating-voltage source above or below a portion, associated thereto, of the total active or reactive power, respectively, to be delivered to the parallel rail, and of deriving from the active differential power a frequency-dependent frequency-control variable to be used for the frequency control and of deriving from the reactive differential power an amplitude-control variable to be used for the amplitude control, characterised by an integrator for producing the frequency dependence of the frequency-control variable.

2. Device according to Claim 1, characterised in that the control variables are fed as sole control signals to the amplitude-control and frequency-control device.

3. Device according to Claim 1, characterised in that the amplitude-control and frequency-control variables are subtracted from the respective desired values of the amplitude-control and frequency-control device.

4. Device according to one of the preceding claims, characterised in that the integrator to which the active differential power is fed has a limited low-frequency gain.

5. Device according to one of the preceding claims, characterised in that, for switching synchronisation/no synchronisation and vice versa, a rate-of-variation limiter is incorporated in the frequency-control circuit.

6. Device according to one of the preceding claims, in which a differential current generating device is present for generating a differential current which is delivered by the respective alternating-voltage source above or below a portion, associated thereto, of the total current to be delivered to the parallel rail, characterised in that the means of determining the active differential power are provided with a multiplier to whose input the differential current is supplied.

7. Device according to one of the preceding claims, in which a differential current generating device is present for generating a differential current which is delivered by the respective alternating-voltage source above or below a portion, associated thereto, of the total current to be delivered to the parallel rail, characterised in that the means of determining the reactive differential power are provided with a series circuit consisting of a 90° phase shifter and a multiplier, the differential current being supplied to the input of the series circuit.

8. Device according to one of the preceding claims, characterised in that at least a section of it is constructed as a program-controlled computer.

9. Device according to one of the preceding claims, provided with an information transfer system, characterised in that the system consists only of one auxiliary connection for informing the alternating-voltage sources.

10. Device according to Claim 9, characterised in that, if the public mains forms part of the system of alternating-voltage sources, the information transmission system comprises a second auxiliary connection to inform the alternating-voltage sources about this.

fig-1

# fig-2

EP 0 519 574 A1

European Patent Office

**EUROPEAN SEARCH REPORT**

Application Number

EP 92 20 1831

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | FR-A-2 632 130 (MITSUBISHI DENKI K.K.)<br>* page 1, line 15 - page 2, line 31 *<br>--- | 1-3,6 | H02J3/46 |
| D,Y | NL-A-7 606 944 (LICENTIA PATENT-VERWALTUNGS GMBH )<br>* page 2, line 5 - page 4, line 6 *<br>* figures 1,2 *<br>--- | 1-3,6 | |
| Y,D | DE-A-3 310 976 (SIEMENS AG)<br>* abstract *<br>* page 16, line 5 - line 29; figure 4 *<br>--- | 1 | |
| Y,D | EP-A-0 014 415 (SIEMENS AKTIENGESELLSCHAFT)<br>* page 27, line 25 - line 31; figure 4 *<br>--- | 2,3 | |
| A | US-A-3 902 076 (E. MEYERS ET AL.)<br>* abstract *<br>* column 3, line 1 - line 11; figure 1 *<br>--- | 1 | |
| A | IEE PROCEEDINGS C. GENERATION, TRANSMISSION, DISTRIBUTION.<br>vol. 129, no. 1C, January 1982, STEVENAGE GB<br>pages 17 - 23;<br>T. HIYAMA ET AL.: 'Design of decentralised load-frequency regulators for interconnected power systems'<br>* page 21, right column, line 5 - page 22, left column, line 2; figure 8 *<br>----- | 5 | **TECHNICAL FIELDS SEARCHED (Int. Cl.5)**<br><br>H02J |

The present search report has been drawn up for all claims

| Place of search | Date of completion of the search | Examiner |
|---|---|---|
| THE HAGUE | 26 AUGUST 1992 | HELOT H.V. |

EPO FORM 1503 03.82 (P0401)